## Europäisches Patentamt

## European Patent Office

## Office européen des brevets

(11) Veröffentlichungsnummer: **0 027 847**
**B1**

(12) **EUROPÄISCHE PATENTSCHRIFT**

(45) Veröffentlichungstag der Patentschrift:
15.02.84

(21) Anmeldenummer: **80103259.0**

(22) Anmeldetag: **12.06.80**

(51) Int. Cl.³: **H 02 P 13/22, H 02 M 3/335,** **G 05 F 1/64**

(54) Verfahren zur Regelung und Strombegrenzung eines Gleichspannungs -Sperrwandlers.

(30) Priorität: **24.09.79 DE 2938533**

(43) Veröffentlichungstag der Anmeldung:
**06.05.81 Patentblatt 81/18**

(45) Bekanntmachung des Hinweises auf die Patenterteilung:
**15.02.84 Patentblatt 84/7**

(84) Benannte Vertragsstaaten:
**AT FR GB SE**

(56) Entgegenhaltungen:
**DE - A - 2 635 089**
**DE - A - 2 701 457**
**DE - A - 2 715 571**
**DE - B - 2 416 985**
**GB - A - 1 473 197**
**US - A - 4 037 271**
**US - A - 4 146 832**

(73) Patentinhaber: **ANT Nachrichtentechnik GmbH,**
**Gerberstrasse 33, D-7150 Backnang (DE)**

(72) Erfinder: **Grünsch, Eckhardt, Im Blütengarten 14,**
**D-7151 Allmersbach im Tai (DE)**

(74) Vertreter: **Schickle, Gerhard, Dipl.-Ing. et al, ANT**
**Nachrichtentechnik GmbH Patent- und Lizenzabteilung**
**Gerberstrasse 33, D-7150 Backnang (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Regelung und Strombegrenzung eines Gleichspannungs-Sperrwandlers

Die Erfindung betrifft ein Verfahren zur Regelung und Strombegrenzung eines Gleicgspannungs-Sperrwandlers mittels eines impulsbreitengesteuerten elektronischen Schalters, der fremdgesteuert periodisch zündbar und in Abhängigkeit von einem Komparatorsignal löschbar ist, wobei zur Bildung des Komparatorsignales eine Referenzspannung und ein Auswertesignal verglichen werden und wobei das Auswertesignal aus der Summe eines Signales für die zu regelnde Ausgangsgrösse und eines Signales, das von einem Stromwandler geliefert wird, der den Gesamtstrom über den elektronischen Schalter transformiert, gebildet ist. Ein derartiges Verfahren ist bekannt aus der DE-A1-2 715 571. Dort dient als zu regelnde Ausgangsgrösse die Verbraucher-Gleichspannung.

Es sind Strombegrenzerschaltungen für geschaltete Stromversorgungsgeräte bekannt, die die zu überwachenden Ströme mittels Messwiderstand oder Stromwandler messen und beim Überschreiten eines bestimmten Wertes den elektronischen Schalter abschalten. Hierbei wird eine dem zu überwachenden Strom proportionale Gleichspannung erzeugt, die mit einem Referenzsägezahnsignal verglichen wird.

Diese Art der Strombegrenzung versagt jedoch, wenn die Leitzeit des elektronischen Schalters kleiner als dessen Speicherzeit werden soll. Da dies bei Schalttransistoren mit Rückkopplung nicht möglich ist, kann der Kollektorstrom unkontrolliert ansteigen.

Des weiteren ist eine Schaltung in der deutschen Patentanmeldung P 2 920 166.9 beschrieben, bei der eine zum Kollektorstrom des Schalttransistors proportionale Spannung einer Sägezahnspannung und einer Referenzspannung überlagert und einem Komparator zugeführt wird zur Steuerung des Tastverhältnisses des Schalttransistors. Der Nachteil dieser Anordnung ist der hohe Schaltungsaufwand gegeben durch den Sägezahngenerator.

Aufgabe der Erfindung ist es, ein Verfahren eingangs genannter Art anzugeben, das keine Sägezahnvergleichsspannungen benötigt und ein verbessertes dynamisches Verhalten besitzt.

Erfindungsgemäss wird diese Aufgabe dadurch gelöst, dass als Signal für die zu regelnde Ausgangsgrösse ein dem Scheitelwert des Gesamtstromes über den elektronischen Schalter proportionaler Gleichspannungswert dient, der durch Spitzenintegration des Stromwandlerausgangssignals erhalten wird.

Anspruch 2 gibt eine vorteilhafte Weiterbildung des erfindungsgemässen Verfahrens an.

Die Vorteile der Erfindung bestehen darin, dass ein unkontrolliertes Ansteigen des Stromes durch den elektronischen Schalter nach Erreichen der Speicherzeit vermieden wird, und dass eine Vergleichssägezähnspannung nicht benötigt wird, da der Komparator durch Zuführen einer zum Gesamtstrom über den elektronischen Schalter proportionalen Spannung ein definiertes Schaltsignal erhält.

Anhand der Beschreibung und der Zeichnungen wird die Erfindung näher erläutert. Dabei zeigt

Fig. 1 ein Blockschaltbild für die Strombegrenzung und -regelung,

Fig. 2 ein Schaltungsbeispiel für einen Eintakt-Sperrwandler.

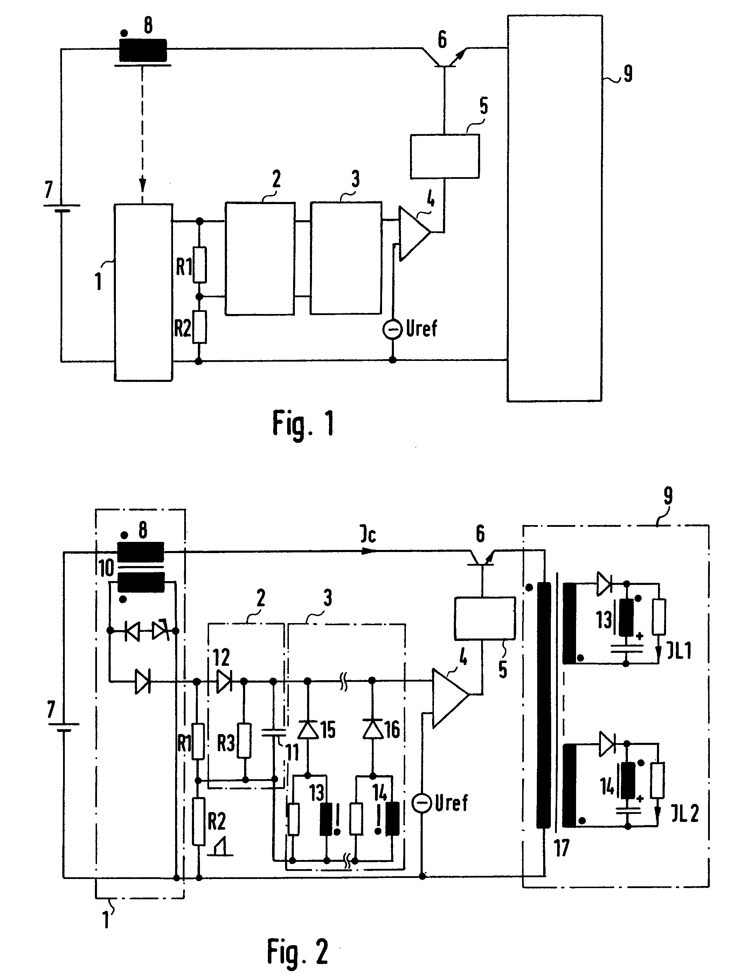

In Fig. 1 ist eine prinzipielle Schaltungsanordnung zu dem erfindungsgemässen Verfahren angegeben.

Der Auswerteeinheit 1, bestehend aus dem Stromwandler 10 und einer Diodenanordnung, wie sie in der DE-A1-2 715 571 beschrieben ist, schliesst sich der aus den Widerständen R1 und R2 gebildete Spannungsteiler, die Spitzenwertintegrationsschaltung 2 und die Laststromauswerteschaltung 3 an. Der Komparator 4 vergleicht das aus der Laststromauswerteschaltung 3 und der Auswerteeinheit 1 gewonnene Signal mit einer Referenzspannung Uref und führt der Ansteuereinheit 5 ein Signal zu. Die Ansteuereinheit 5 steuert dadurch den elektronischen Schalter 6, der im Stromkreis der Eingangsspannungsquelle 7 und der Primärwicklung 8 eines Stromwandlers 10 sowie des Wandlersteils 9 liegt. Das Wandlerteil 9 kann als Sperrwandler mit oder ohne galvanischer Trennung mit einem oder mehreren Laststromkreisen ausgebildet sein.

Fig. 2 zeigt als Ausführungsbeispiel einen Eintakt-Sperrwandler mit zwei Laststromkreisen. Der periodisch fliessende Kollektorstrom $J_c$ des Schalttransistors 6 wird mit Hilfe des Stromwandlers 10 transformiert und erzeugt an den Widerständen R1 und R2 eine zu $J_c$ proportionale Spannung, wobei R2 so dimensioniert ist, dass die Spannung an R1 sehr viel grösser als jene an R2 ist.

Bei der Kollektorstrombegrenzung und -regelung wird über die Diode 12 der Kondensator 11 annähernd auf den Spitzenwert der Spannung am Widerstand R1 aufgeladen, so dass die Gleichspannung am Kondensator 11 proportional dem Kollektorspitzenstrom $J_c$ des Schalttransistors 6 ist. Durch additive Überlagerung der Gleichspannung am Kondensator 11 und der an R2 gebildeten, dem Gesamtkollektorstrom proportionalen Spannung erhält der Komparator 4 sein Schaltsignal. Übersteigt die dem Komparator zugeführte Summenspannung den Wert der dem Komparator 4 ebenfalls zugeführten Referenzspannung Uref, so schaltet dieser durch und sperrt über die Ansteuereinheit 5 den Schalttransistor 6. Da jetzt kein Kollektorstrom $J_c$ mehr fliesst, steht am Widerstand R2 keine Spannung mehr an. Dies bedeutet, dass der Komparator in seine ursprüngliche Lage zurückschaltet. Über eine Ansteuerlogik der Ansteuereinheit 5 wird der Schalttransistor 6 bis zur nächsten Schaltperiode gesperrt gehalten. Durch die Spitzenwertintegration des Kondensators 11 begrenzen die Speicherzeiten des Schalttransistors 6 nicht den ausnutzbaren Regelbereich.

Bei der Laststrombegrenzung und -regelung wird der Kondensator 11 auf die Spannung aufgeladen, die dem höchsten der Ladeströme JL1, JL2, ... JLn proportional ist. Die Laststromauswertung selbst kann beliebig erfolgen. Beim ausgeführten Beispiel wird das Prinzip der deutschen Patentanmeldung P 2 921 928.1 angewendet. An den Sekundärwicklungen der Übertrager 13 und 14 entstehen zu den jeweiligen Lastströmen proportionale Spannungen, die über die Dioden 15 und 16 den Kondensator 11 aufladen und zwar so, dass die Kondensatorspannung zum jeweils höchsten der auftretenden Lastströme proportional ist. Dem Komparator 4 wird bei der Laststrombegrenzung und -regelung die Summe aus der am Kondensator 11 anstehenden, zum höchsten der Lastströme proportionalen gleichgerichteten Spitzenspannung und der an R2 zum Kollektorstrom proportionalen Spannung zugeführt. Die Funktionsweise des Komparators 4 ist die gleiche wie bei der zuvor beschriebenen Kollektorstrombegrenzung und -regelung.

Zur Entladung des Kondensators 11 ist ihm ein hochohmiger Widerstand R3 parallelgeschaltet. Der Widerstand R1 ist so dimensioniert, dass bei maximaler Ausgangsleistung, d.h. alle Lastströme befinden sich dicht vor dem Ansprechwert der Strombegrenzung, die Kollektorstrombegrenzung und -regelung nicht anspricht.

Die Kollektorstrombegrenzung und -regelung setzt dann ein, wenn ein Fehlerfall auftritt, der durch die Laststrombegrenzung und -regelung nicht erfasst werden kann. Ein solcher Fehlerfall kann z.B. ein Kurzschluss an einer Sekundärwicklung des Leistungsübertragers 17 des Wandlerteils 9 sein. Dies bedeutet, dass auch bei Fehlerfällen, die durch die Laststrombegrenzung und -regelung nicht erfasst werden können, der Schalttransistor 6 nicht zerstört wird.

Ausser der Möglichkeit, beliebig viele Lastströme JL1, JL2, ... JLn zu begrenzen bzw. zu regeln, ist durch die gleichzeitige Überwachung des Kollektorstromes ein umfassender Schutz des Schalttransistors 6 gewährleistet.

## Patentansprüche

1. Verfahren zur Regelung und Strombegrenzung eines Gleichspannungs-Sperrwandlers mittels eines impulsbreitengesteuerten elektronischen Schalters (6), der fremdgesteuert periodisch zündbar und in Abhängigkeit von einem Komparatorsignal löschbar ist, wobei zur Bildung des Komparatorsignales eine Referenzspannung (Uref) und ein Auswertesignal verglichen werden und wobei das Auswertesignal aus der Summe eines Signales für die zu regelnde Ausgangsgrösse und eines Signales, das von einem Stromwandler (10) geliefert wird, der den Gesamtstrom über den elektronischen Schalter transformiert, gebildet ist, dadurch gekennzeichnet, dass als Signal für die regelnde Ausgangsgrösse ein dem Scheitelwert des Gesamtstromes über den elektronischen Schalter (6) proportionaler Gleichspannungswert dient, der durch Spitzenintegration des Stromwandlerausgangssignals erhalten wird.

2. Verfahren nach Anspruch 1, dadurch gekennzeichnet, dass als zusätzliches Signal für die zu regelnde Ausgangsgrösse ein zum Scheitelwert eines der Lastströme proportionaler Gleichspannungswert dient.

## Claims

1. Method for the regulation and current limitation of a direct current ringing choke converter by means of a pulse-width-controlled electronic switch (6), which is periodically ignitable under external control and extinguishable in dependence on a comparator signal, wherein a reference voltage (Uref) and an evaluation signal are compared for the formation of the comparator signal and wherein the evaluation signal is formed from the sum of a signal for the output magnitude to be regulated and a signal which is supplied by a current converter (10) which transforms the total current through the electronic switch, characterised thereby, that a unidirectional voltage value, which is proportional to the peak value of the total current through the electronic switch (6) and which is obtained by peak integration of the current converter output signal, serves as signal for the output magnitude to be regulated.

2. Method according to claim 1, characterised thereby, that a unidirectional voltage value, which is proportional to the peak value of one of the load currents, serves as additional play for the output magnitude to be regulated.

## Revendications

1. Procédé de régulation et de limitation du courant d'un convertisseur continu-continu à découpage, à l'aide d'un interrupteur électronique commandé par durée d'impulsion, amorcé périodiquement par commande extérieure et effacé en fonction d'un signal de comparateur, formé par comparaison d'une tension de référence et d'un signal de traduction constitué par la somme d'un signal de la grandeur de sortie à régler et d'un signal délivré par un transformateur d'intensité, qui transforme le courant total dans l'interrupteur électronique, ledit procédé étant caractérisé en ce que le signal de la grandeur de sortie à régler est constitué par une valeur de tension continue, proportionnelle à la valeur de crête du courant total dans l'interrupteur électronique (6), et obtenue par une intégration de la valeur de pointe du signal de sortie du transformateur d'intensité.

2. Procédé selon la revendication 1, caractérisé en ce qu'une valeur de tension continue, proportionnelle à la valeur de crête d'un des courants de charge, sert de signal supplémentaire de la grandeur de sortie à régler.

Fig. 1

Fig. 2